# EUROPEAN PATENT SPECIFICATION

(11) **EP 1 813 062 B1**
(45) Date of publication and mention of the grant of the patent: **26.02.2014**
(21) Application number: 05823756.1
(22) Date of filing: 16.11.2005
(51) Int. Cl.: H04L 12/28, H04L 29/08

(54) **NETWORK DEVICE AND INFORMATION PROTOCOL FOR OPEN NETWORK SYSTEM**
NETZWERKVORRICHTUNG UND INFORMATIONSPROTOKOLL FÜR EIN OFFENES NETZWERKSYSTEM
DISPOSITIF RESEAU ET PROTOCOLE D'INFORMATION POUR SYSTEME DE RESEAU OUVERT

(30) Priority: 16.11.2004 US 627961 P
(43) Date of publication of application: 01.08.2007
(73) Proprietor: LG Electronics, Inc., Seoul 150-010 (KR)
(72) Inventor: KIM, Chang Hyun c/o LG Electronics Inc. IP Group, Seoul 137-724 (KR)
(74) Representative: Katérle, Axel
(86) International application number: PCT/KR2005/003877
(87) International publication number: WO 2006/054859

(56) References cited:
- WO-A1-03/107597
- KR-A- 2004 055 447
- US-A1- 2004 064 575

## Description

### 1. TECHNICAL FIELD

The present document relates to a distributed open network, and more particularly, a network device information protocol or structure for an open network system, such as a home network.

### 2. BACKGROUND ART

Recently, inexpensive and universal networking technologies based on a variety of small devices have been introduced and commercialized. Home networking connects a variety of devices used in the home, such as a refrigerator, a TV, a washing machine, a personal computer (PC), and an audio/video system, thereby allowing convenient use of the devices. Universal Plug and Play (UPnP™) has been suggested for such home networking. UPnP is a distributed, open network architecture.

It has become easier to install and set peripherals to a PC due to a Plug and Play (PnP) feature supported by the current PC operating systems. The UPnP technology has extended such features to a network, based on standard Internet technologies such as TCP/IP, HTTP, and XML and ensures that a device can be added to the network, on which a variety of household appliances, a network printer, and a network device such as an Internet gateway are networked, and the added device can be used through networking.

A UPnP network is basically composed of a number of UPnP devices and services and a control point (CP). The term "service" in the UPnP network refers to the smallest unit of control on the network, which is modeled through state variables.

The term "control point" in the UPnP network refers to a control application which is operated by a device, for example, a physical device such as a PDA that it is easy for the user to handle and which has a feature to discover and control other devices and/or services.

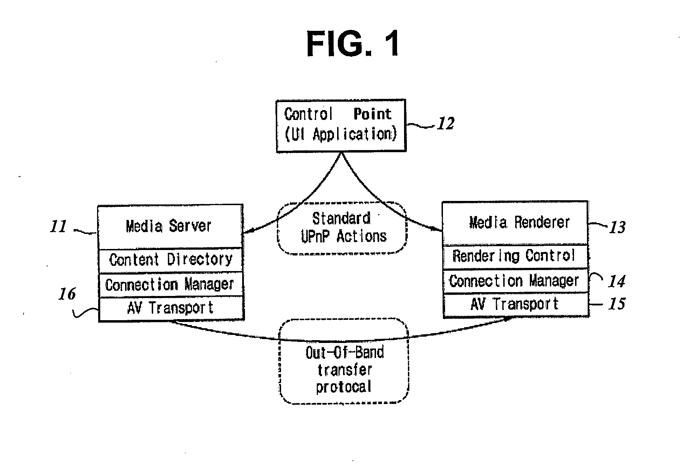

As illustrated in FIG. 1, a UPnP AV home network comprises a media server (MS) 11 for providing media data to the home network, a media renderer 13 for playing media data through the home network, and an AV control point (CP) 12 for controlling the media server 11 and the media renderer 13. The media server 11 and the media renderer 13 are devices controlled by the control point 12.

A media playback procedure in the network of FIG. 1 is performed in the following manner. In order to provide the control point 12 with directory information, the media server 11 transmits information about a media file to the control point 12 using its file system each time a UPnP action (for example, a browsing action) occurs. Data of a media file selected by a UI of the control point 12 is transmitted in a streaming fashion between the media server 11 and the media renderer 13, and is played by the media renderer 13.

An AV Transport Service (AVTS) 15 and a Rendering Control Service (RCS) 14 are involved in such playback. The RCS 14 is provided in the media renderer 13, and the AVTS 14 is provided in the media renderer 13 (in pull mode) or in the media server 11 (in push mode) depending on the streaming type.

State variables of each service can be used not only in the service but also in other devices or services. For example, when the user requests the control point 12 to bookmark a content being played, the control point 12 obtains state variables of each service involved in the playback of the content, and provides the obtained state variables to other devices or services so that the devices or services can use the obtained state variables when receiving requests from the devices or services afterwards.

Patent application US 2004/0064575 Al discloses a network device executing a UPnP application that may create and maintain a device description document that includes information describing the services and/or embedded devices available on that device. For each available service, the device will have a service description document that includes the set of actions that may be performed by the service as well as the current state of those actions using a set of state variables. A service available on a device executing a UPnP application also includes a state table and a control server. The state table includes the current state of each variable declared in the service description document. For each action request received, the control server executes those requested actions, updates any affected state variables in the state table as necessary and responds to the requestor of the action request to indicate completion or failure of the requested action. A control point may discover a service and retrieve its description document and, based on the allowable actions indicated in the service description document and the current state of those actions, the control point may send an action request to the control server for that service.

There is a need to appropriately structure obtained state variables of a service and other additional information in order to allow the state variables to be used by other devices or services afterwards.

### 3.DISCLOSURE OF INVENTION

Therefore, the present invention has been made in view of such circumstances, and it is an object of the present invention to provide a method for structuring state

information obtained from devices on a network, together with information allowing other devices or services to determine whether to use the obtained state information, and using state information from the structured information.

According to one aspect of the invention, a method as in claim 1 for setting state information of a service provided by a network device that is operationally connected to a UPnP open network system comprises receiving a state information setting action for setting state variables of at least one service provided by the network device; extracting an input argument from the state information setting action, wherein the input argument comprises state information for setting the state variables and source information; comparing the source information of the input argument with source information of the at least one service; and determining whether to set the state variables of the at least one service according to the comparison, wherein the source information of the state information and the source information of the at least one service comprises at least one of device identification information, service identification information and service type information. Preferably, the at least one service is at least one of a rendering control service and an audio visual transport service. The method may further comprise setting the state variables of the at least one service to state information values included in the input argument if the source information of the input argument matches the source information of the at least one service.

According to one embodiment of the invention, the service type information comprises at least one of a service identifier and version information.

According to another embodiment of the invention, the input argument comprises an instance identifier for identifying a connection for playing media content after setting the state variables of the at least one service.

According to another embodiment of the invention, the method described above comprises ignoring state information values included in the input argument if the source information of the input argument does not match the source information of the at least one service. Preferably, the at least one service is a rendering control service. In addition, a control point sets the state variables of the at least one service to default values if the source information of the input argument does not match the source information of the at least one service.

According to yet another embodiment of the invention, the method further comprising partially setting the state variables of the at least one service to corresponding state information values included in the input argument if the source information of the input argument does not match the source information of the at least one service. Preferably, the at least one service is an audio visual transport service.

According to one embodiment of the invention, the state information and the source information are information included in a bookmark object. Also, the step of receiving a state information setting action may be initiated in response to receiving a bookmark selection command.

According to another aspect of the present invention, a network device as in claim 13 for setting state information of a service comprises a receiver for receiving a state information setting action for setting state variables of at least one service provided by the network device; and a processor for extracting an input argument from the state information setting action, wherein the input argument comprises state information for setting the state variables and source information, comparing the source information of the input argument with source information of the at least one service, and determining whether to set the state variables of the at least one service according to the comparison, wherein the source information of the state information and the source information of the at least one service comprises at least one of device identification information, service identification information and service type information.

Further embodiments of the network device are recited in the dependent claims.

### 4.BRIEF DESCRIPTION OF DRAWINGS

The above and other objects, features and other advantages of the present invention will be more clearly understood from the following detailed description taken in conjunction with the accompanying drawings, in which:
FIG. 1 illustrates the structure of a general UPnP AV network.
FIG. 2 illustrates a procedure for creating a bookmark object according to an embodiment of the present invention.
FIG. 3 illustrates the structure of a bookmark object according to the embodiment of the present invention.
FIG. 4 illustrates an XML schema defining source information (deviceUDN) of state information according to the embodiment of the present invention.
FIG. 5 illustrates an XML schema of a collection of state information "stateVariableCollection".
FIG. 6 illustrates an example of a bookmark created according to the structure of the bookmark object of FIG. 3 and the schemas of the structure of the source information and the structure of the state information collection defined as in FIGS. 4 and 5.
FIG. 7 illustrates how a control point obtains, from a device, source information of a service provided by the device.
FIG. 8 illustrates the structure of an action for setting RCS state variables in a bookmark object in a media renderer.
FIGS. 9a and 9b illustrate types of errors which may occur in a procedure for setting RCS and AVTS state variables in a bookmark object to a corresponding device.

### 5. MODES FOR CARRYING OUT THE INVENTION

Preferred embodiments of the present invention will now be described with reference to the accompanying drawings.

In the following description of the embodiments of the present invention, the present invention is exemplified by obtaining state information from a device or service on a network when a bookmark request is made. However, without being limited to the bookmark request, the present invention can be applied to any case where source information of state information is needed when the state information is obtained from a device or service on the network.

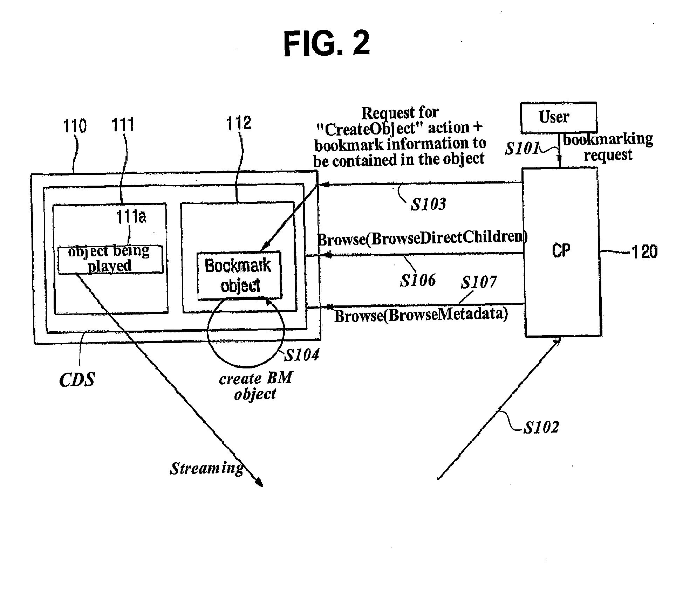

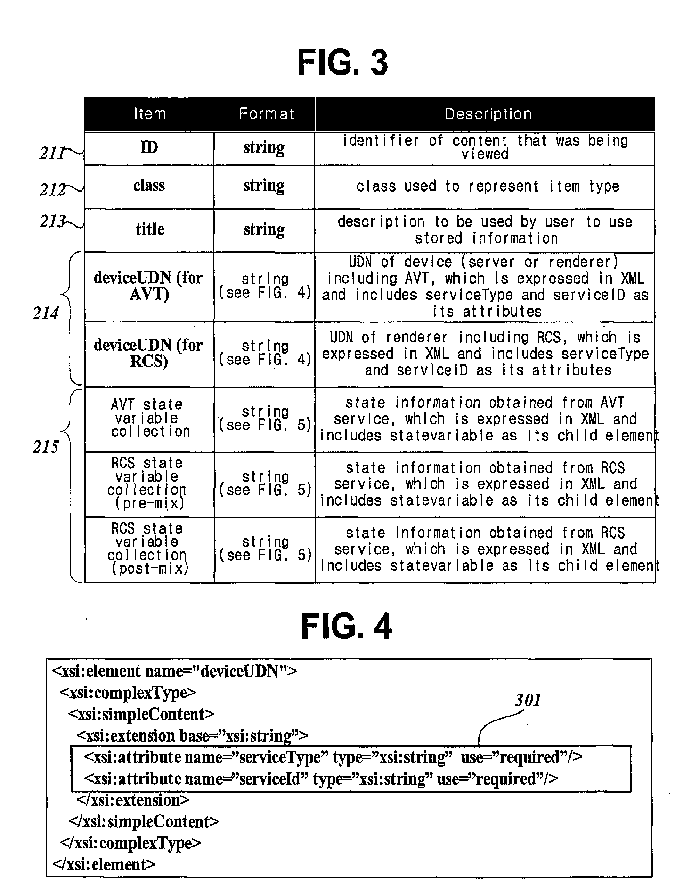

FIG. 2 illustrates a procedure for creating a bookmark object according to an embodiment of the present invention, wherein a control point 120 creates a bookmark object having a structure as shown in FIG. 3 when the user requests a bookmark. The bookmark object structure of FIG. 3 is stored in the media server 110.

The bookmark object structure of FIG. 3 includes a bookmarked object ID field 211, a bookmarked object class field 212, a bookmark title field 213, unique device name (deviceUDN) fields 214, and state information collection fields 215. The bookmark title field 213 includes information having a type which can be read and understood by the user, for example, information expressed in a string. The deviceUDN fields 214 include identification information of an AVTransport Service (AVTS) which controls streaming of a bookmarked object and identification information of a Rendering Control Service (RCS) of a media renderer which was presenting the bookmarked object. The state information collection fields 215 include a collection of AVTS state information (for example, playback time point), a collection of RCS state information before mixing, and a collection of RCS state information after mixing. Each of the state information is written in a markup language, for example, in eXtended Markup Language (XML), and source information (i.e., deviceUDN) of the state information is written in the same language.

FIG. 4 illustrates an XML schema defining the deviceUDN element according to the preferred embodiment of the present invention. The deviceUDN element includes service type information "serviceType" and service identification information "serviceID" 301 as its attributes as defined in the structure of FIG. 4.

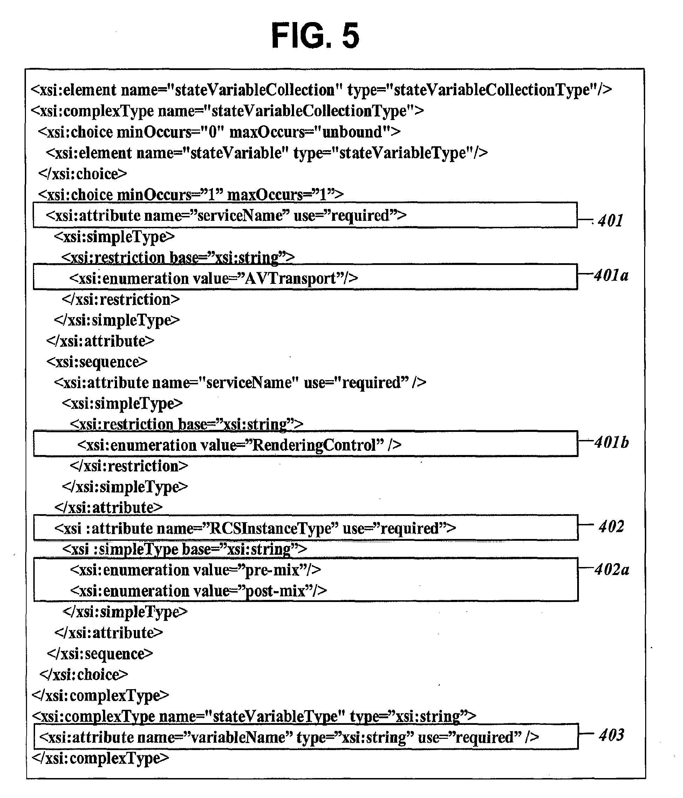

FIG. 5 illustrates an XML schema of a collection of state information "stateVariableCollection". The structure of the state information collection includes an attribute "serviceName" 401, in which service names "AVTransport" 401a and/or "RenderingControl" 401b can be written. A sequence, in which the service name "RenderingControl" is written, includes an attribute "RCSInstanceType" 402, in which RCS instance types "pre-mix" and/or "post-mix" 402a can be written. Finally, the structure of the state information collection includes an attribute "variableName" 403. The terms "pre-mix" and "post-mix" are control information associated with input and output of a device, respectively.

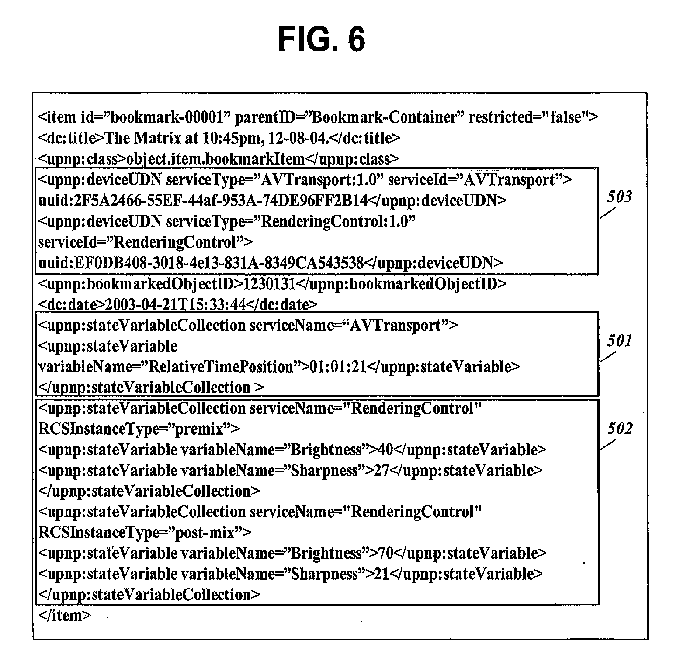

FIG. 6 illustrates an example of a bookmark created according to the structure of the bookmark object of FIG. 3 and the schemas of the structure of the source information (deviceUDN) and the structure of the state information collection (stateVariableCollection) defined as in FIGS. 4 and 5.

In the example of FIG. 6, the bookmark is created for a content object which has an item ID "bookmark-00001" under a container named "Bookmark_Container" and has an object ID "1230131". A title of the bookmark includes a string "The Matrix at 10:45pm, 12-08-04", and a class thereof is defined as "object.item.bookmarkitem".

State information of an "AVTransport" service includes a value (01:01:21) of a state variable "RelativeTimePosition" indicating a bookmarked time point (501). State information of a "RenderingControl" service includes values (40,27) and (70,21) of state variables "Brightness" and "Sharpness" of each of the RCS Instance types "pre-mix" and "post-mix" (502). The above specific value of each state variable is only illustrative and has no special meaning.

Source information (deviceUDN) of the state information included in the bookmark includes information "UDN", "serviceType", and "serviceID" of each of the AVTransport and RenderingControl services (503). As illustrated in FIG. 6, service names "AVTransport" and "RenderingControl" identifying the services are written in the "serviceID" information, and information in the form of "service name : service version" is written in the "serviceType" information.

The form of writing the source information illustrated in FIG. 6 is only an example, and the source information can be written in any form, provided that the service identification information and the service version information in addition to the UDN information is included in the source information.

An operation for creating a bookmark object having the structure as described above will now be described in detail with reference to FIG. 2.

When the user requests a bookmark for content 111a which the user is currently viewing through a media renderer, such as a DVD player, a "createObject" action defined in UPnP AV is used to cause a media server 110 to create a bookmark object (also referred to as a "bookmark item") having the structure as shown in FIG. 3.

Preferably, when the user requests a bookmark at a certain time while viewing content (S101), the control point 120 invokes a "GetStateVariables()" action on an RCS and an AVTS of the media renderer to receive state variables assigned to the currently streaming content object (S102). When the content object is streaming in push mode, the control point 120 invokes a "GetStateVariables()" action on an AVTS provided in the media server 110 to receive AVTransport state variables.

The control point 120 is a control application which functions to discover and control other devices and/or services, and is operated by a device, for example, a PDA which is easy for the user to handle. Of course, the control point 120 can also be implemented in conjunction with the media renderer.

The control point 120 invokes a "CreateObject" action for creating a bookmark object on a content directory service (CDS) of the media server 110, while transferring necessary information to be contained in the bookmark object, as an input argument, to the media server 110 (S103). The transferred necessary information includes a collection of state variables obtained through the "GetStateVariables ()" action and information to be recorded in the bookmarked object ID field 211, the object class field 212, the title field 213, and the state variable source information (UDN, service ID, and serviceType) fields 214 as shown in FIG. 3.

Information transferred to be recorded in the state information source information fields 214 is previously obtained through a device descriptor which the control point 120 receives when discovering a device (and a service of the device) on the network.

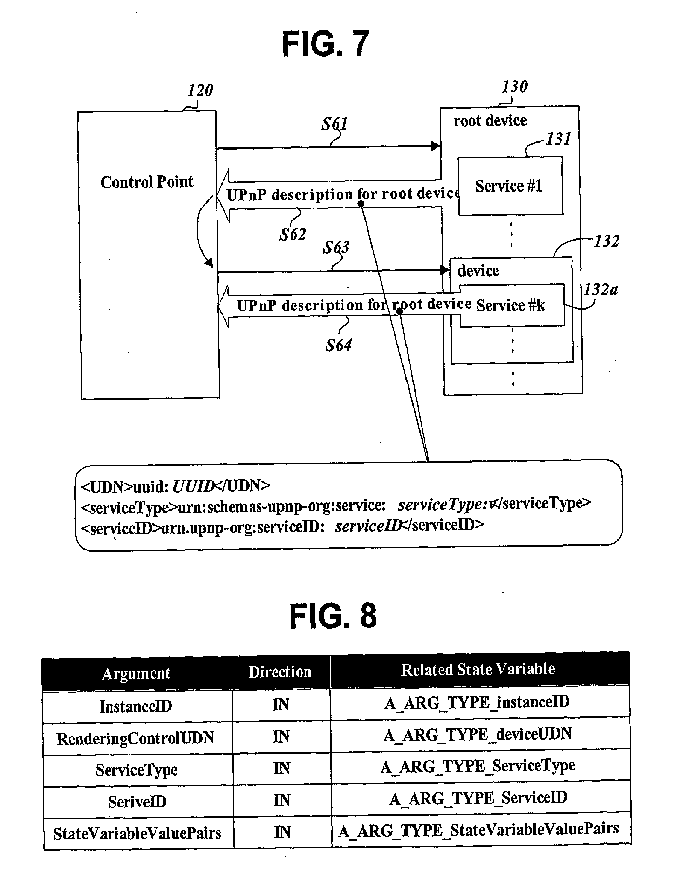

FIG. 7 illustrates how a control point 120 obtains, from a device, source information of a service provided by the device. When the control point 120 starts a discovery process to discover devices on the network (S61), for example, by sending an M-search command to the network, a device 130 on the network responds to the M-search command by providing a device description containing a UDN of the device 130 and attributes "service ID" and "serviceType" of a service 131 included in the device 130 to the control point 120 (S62). When sub-devices 132 are present in the device, the device description provides a list of access information (for example, URLs) of the sub-devices 132. With reference to the access information of the sub-devices 132, the control point 120 requests device information from the sub-devices 132 (S63), and the sub-devices 132 provide device information including information "UDN" of the sub-devices 132 and information "service ID" and "serviceType" of services 132a included in the sub-devices 132 to the control point 120 (S64). In this manner, the control point 120 previously obtains source information (UDN, serviceID, serviceType) of all devices and services present on the network. Italicized words "UUID", "serviceType:v", and "serviceID" in FIG. 7 correspond to the previously obtained source information.

Information to be recorded in the title field 213, which is transferred as an input argument of the "CreateObject" action, can be divided into vendor specific and user input parts to be set in the title field 213. If the user input part is set in the title field 213, the control point 120 requests the user to input a desired string for easy identification of the content, and transfers information input by the user, as an input argument of the "CreateObject" action, to the media server 110. When no specific input is received, the control point 120 may transfer information of the title of the object requested to be bookmarked and information of the date/time when the bookmark is requested, as title information, to the media server 110. The information to be recorded in the object class field 212 is provided as "object.item.bookmarkitem" as described above. Other necessary information can also be incorporated and transferred according to various other embodiments.

Both the "CreateObject" action for creating the bookmark object and its input arguments are written in markup language, for example, in XML, and the "CreateObject" action is transferred to the media server 110.

When the "CreateObject" is invoked on the media server 110, the CDS of the media server 110 creates a single bookmark object based on information carried in the input arguments of the action, according to the structure suggested in FIG. 3. The ID of the object is determined according to a predetermined method ("bookmark-0001" in the example of FIG. 6), and it is recorded as an item ID of the created bookmark item (S104), completing the requested bookmark object creation operation.

An additional operation such as update of meta data about the bookmarked content object may be needed due to the creation of the bookmark object. However, a description of the additional operation is omitted herein since it is not directly related to the present invention.

Information about the bookmark object created in the media server 110 can be modified (changed or added) through appropriate actions according to user requests, for example, according to operations such as bookmark editing through a UI provided by the control point 120. However, modification of the source information (an element "deviceUDN" and its attributes "serviceID" and "serviceType") of the state information in the bookmark object is not allowed in any case.

When the user requests a bookmark list through the control point 120 after the above bookmark creation procedure is completed and playback of the content which has been streamed is completed, the control point 120 invokes an action for browsing objects in an arbitrary or specified container on the media server 110 (S106), and selects one of the browsed objects (for example, the created bookmark object) and invokes an action for browsing meta data of the selected object on the media server 110 (S107), thereby obtaining all information of the selected bookmark.

When the user requests execution of the selected bookmark, the control point 120 invokes an action for preparing for a connection on a media renderer specified to play when needed, and receives, as a response, an instance ID (instanceID) which is assigned to the connection by the AVTS and RCS. The instance ID is identification information used for controlling the RCS and the ATVS during streaming of content corresponding to the selected bookmark. In the case of push mode, the control point 120 invokes an action for preparing for a connection on the media server 110 when needed and receives, as a response, an instance ID assigned to the connection by the AVTS provided in the media server 110.

The control point 120 transfers information about content to be played to the AVTS in the media renderer (or in the media server 110) through a "setAVTransportURI ()" action, and finally transfers RCS and AVT state variable collections in the bookmark object to the media renderer by means of input arguments of a "SetstateVariable ()" action in order to request the media renderer to directly set the RCS and AVT state variable collections in the RCS and AVTS and then to cause the media renderer to resume playback of the content as requested by the user. In the case of push mode, the "SetstateVariable ()" action of the AVTS is invoked on the media server 110.

The "SetstateVariable ()" action has an exemplary structure as shown in FIG. 8. FIG. 8 illustrates an example of the structure of an action for setting RCS state variables, where an element "RenderingControlUDN" includes attributes "serviceType" and "serviceID" as shown in FIG. 4. An element "AVTransportUDN" instead of the element "RenderingControlUDN" is written as an input argument in a structure of an action for setting AVTS state variables. An RCS state variable collection included in the bookmark information is written in an input argument "StateVariableValuePairs" in the action for setting RCS state variables, whereas an AVT state variable collection included in the bookmark information is written in an input argument "StateVariableValuePairs" in the action for setting AVTS state variables.

The attribute "instanceID" in the structure of the "SetstateVariable ()" action of FIG. 8 has a value obtained in the previously performed process for preparing for a connection with the service. Based on the value of the "instanceID" attribute, the service, which has received the "SetstateVariable ()" action having the structure of FIG. 8, determines content streaming for which the service is to set state variables so as to be applied to playback.

Upon receiving the RCS state variable setting action, the media renderer compares a UDN in the "RenderingControlUDN" element in the action with a UDN assigned to the RCS of the media renderer. If the two UDNs are identical (i.e., if the media renderer currently requested to execute the bookmark is the same as the media renderer which was rendering at the moment of setting the bookmark), the media renderer reads service type information "serviceType" received through the action and service type information "serviceType" set in the current service, and determines whether it can accommodate RCS state variables received through the action if a version in the service type information received through the action is lower than or equal to a version in the service type information set in the current service. If the version in the service type information received through the action is higher or different than the version in the service type information set in the current service, the renderer sets only part of the state variables which can be accommodated by the current version of the RCS. Of course, the media renderer performs the above procedure when information "serviceID" received through the action is identical to information "serviceID" of the media renderer, and does not perform the above procedure when information "serviceID" received through the action is different from that of the media renderer.

If the two UDNs are different (i.e., if the media renderer currently requested to execute the bookmark is different from the media renderer which was rendering at the moment of setting the bookmark), the media renderer disregards RCS state variables received through the action and sets its state variables by default.

Upon receiving the AVTS variable state setting action, the media renderer (or the media server) determines whether to accommodate the state variable setting request based on information "UDN", "serviceType", and "serviceID" in the same manner as described above with reference to the RCS state variables. However, since specific ones of the AVTS state variables (for example, paused playback position information) can be used even when the UDNs are different, the media renderer does not disregard all AVTS state variables and instead directly sets part of the AVTS state variables, which the media renderer can accommodate so as to be applied to playback.

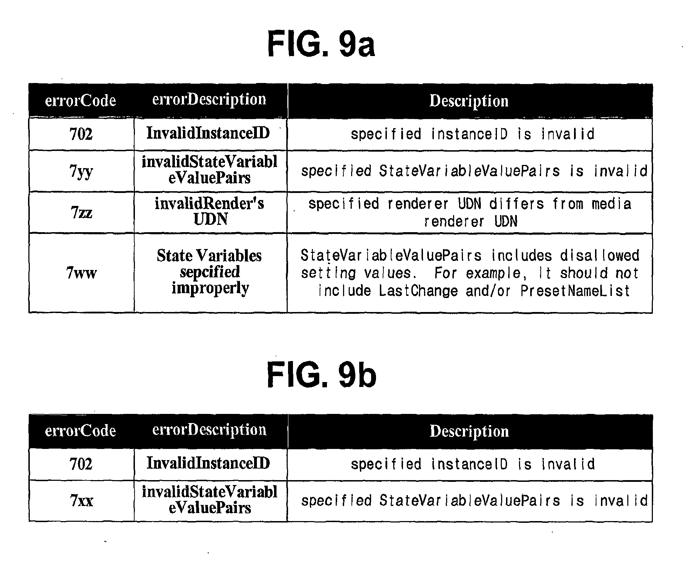

When an action for setting state variables is received, the state variables may be disregarded as described above, and the structure or input arguments of the action or values of the state variables may also be erroneous. In this case, the media renderer (or the media server) transfers, as a response to the state variable setting action, an error code as shown in FIGS. 9a and 9b to the control point 120. FIG. 9a illustrates an error table for the RCS state variable setting and FIG. 9b illustrates an error table for the AVT state variable setting. Error types of FIG. 9a and FIG. 9b are only illustrative, and various other error types may be added, and a device, which has received such a state variable setting request, may respond with corresponding error information.

As is apparent from the above description, at least one embodiment of the present invention provides a method for structuring and providing state information, together with information of a source which has created the state information, to other devices or services, thereby allowing the devices or services to previously determine whether or not the state information is valid for them and thus to determine whether to accommodate the state information. This prevents malfunction of a device or service, which may be caused by setting state information whose values are invalid for the device or service.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A method for setting state information of a service provided by a network device, operationally connected to a UPnP open network system, the method comprising: receiving a state information setting action for setting state variables of at least one service provided by the network device; extracting an input argument from the state information setting action, wherein the input argument comprises state information for setting the state variables and source information; comparing the source information of the input argument with source information of the at least one service; and determining whether to set the state variables of the at least one service according to the comparison, wherein the source information of the input argument and the source information of the at least one service comprises at least one of device identification information, service identification information and service type information (301).

2. The method of claim 1, wherein the at least one service is at least one of a rendering control service and an audio visual transport service.

3. The method of claim 1, wherein the service type information comprises at least one of a service identifier and version information.

4. The method of claim 1, wherein the input argument comprises an instance identifier for identifying a connection for playing media content after setting the state variables of the at least one service.

5. The method of claim 1, further comprising setting the state variables of the at least one service to state information values included in the input argument if the source information of the state information matches the source information of the at least one service.

6. The method of claim 1, further comprising ignoring state information values included in the input argument if the source information of the state information does not match the source information of the at least one service.

7. The method of claim 6, wherein the at least one service is a rendering control service.

8. The method of claim 6, further comprising setting the state variables of the at least one service to default values if the source information of the state information does not match the source information of the at least one service.

9. The method of claim 1, further comprising partially setting the state variables of the at least one service to corresponding state information values included in the input argument if the source information of the state information does not match the source information of the at least one service.

10. The method of claim 9, wherein the at least one service is an audio visual transport service.

11. The method of claim 1, wherein the state information and the source information are information included in a bookmark object.

12. The method of claim 1, wherein the step of receiving a state information setting action is initiated in response to receiving a bookmark selection command.

13. A network device for setting state information of a service, the network device comprising: a receiver for receiving a state information setting action for setting state variables of at least one service provided by the network device; and a processor for extracting an input argument from the state information setting action, wherein the input argument comprises state information for setting the state variables and source information, comparing the source information of the input argument with source information of the at least one service, and determining whether to set the state variables of the at least one service according to the comparison, wherein the source information of the input argument and the source information of the at least one service comprises at least one of device identification information, service identification information and service type information (301).

14. The network device of claim 13, wherein the at least one service is at least one of a rendering control service and an audio visual transport service.

15. The network device of claim 13, wherein the service type information comprises at least one of a service identifier and version information.

16. The network device of claim 13, wherein the input argument comprises an instance identifier for identifying a connection for playing media content after setting the state variables of the at least one service.

17. The network device of claim 13, wherein the processor sets the state variables of the at least one service to state information values included in the input argument if the source information of the state information matches the source information of the at least one service.

18. The network device of claim 13, wherein the processor ignores state information values included in the input argument if the source information of the state information does not match the source information of the at least one service.

19. The network device of claim 18, wherein the at least one service is a rendering control service.

20. The network device of claim 18, wherein the processor sets the state variables of the at least one service to default values if the source information of the state information does not match the source information of the at least one service.

21. The network device of claim 13, wherein the processor partially sets the state variables of the at least one service to corresponding state information values included in the input argument if the source information of the state information does not match the source information of the at least one service.

22. The network device of claim 21, wherein the at least one service is an audio visual transport service.

23. The network device of claim 13, wherein the state information and the source information are information included in a bookmark object.

## Patentansprüche

1. Verfahren zum Einstellen von Zustandsinformation eines Dienstes, der durch eine Netzwerkeinrichtung bereitgestellt wird, die betriebsmäßig mit einem offenen UPnP-Netzwerksystem verbunden ist, wobei das Verfahren umfasst: Empfangen einer Zustandsinformationseinstellaktion zum Einstellen von Zustandsvariablen wenigstens eines durch die Netzwerkeinrichtung bereitgestellten Dienstes; Extrahieren eines Eingabearguments aus der Zustandsinformationseinstellaktion, wobei das Eingabeargument Zustandsinformation zum Einstellen der Zustandsvariablen und Quelleninformation umfasst; Vergleichen der Quelleninformation des Eingabearguments mit Quelleninformation des wenigstens einen Dienstes; und Bestimmen, ob die Zustandsvariablen des wenigstens einen Dienstes in Abhängigkeit von dem Vergleich eingestellt werden sollen, wobei die Quelleninformation des Eingabearguments und die Quelleninformation des wenigstens einen Dienstes Einrichtungskennungsinformation, Dienstkennungsinformation und/oder Dienstartinformation (301) umfassen.

2. Verfahren nach Anspruch 1, wobei der wenigstens eine Dienst ein Rendering-Steuerdienst und/oder ein audiovisueller Transportdienst ist.

3. Verfahren nach Anspruch 1, wobei die Dienstartinformation eine Dienstkennung und/oder Versionsinformation umfasst.

4. Verfahren nach Anspruch 1, wobei das Eingabeargument eine Instanzkennung zum Identifizieren einer Verbindung zum Abspielen eines Medieninhalts nach dem Einstellen der Zustandsvariablen des wenigstens einen Dienstes umfasst.

5. Verfahren nach Anspruch 1, das ferner das Einstellen der Zustandsvariablen des wenigstens einen Dienstes auf im Eingabeargument enthaltene Zustandsinformationswerte umfasst, wenn die Quelleninformation der Zustandsinformation und die Quelleninformation des wenigstens einen Dienstes zusammenpassen.

6. Verfahren nach Anspruch 1, das ferner das Ignorieren von im Eingabeargument enthaltenen Zustandsinformationswerten umfasst, wenn die Quelleninformation der Zustandsinformation und die Quelleninformation des wenigstens einen Dienstes nicht zusammenpassen.

7. Verfahren nach Anspruch 6, wobei der wenigstens eine Dienst ein Rendering-Steuerdienst ist.

8. Verfahren nach Anspruch 6, das ferner das Einstellen der Zustandsvariablen des wenigstens einen Dienstes auf voreingestellte Werte umfasst, wenn die Quelleninformation der Zustandsinformation und die Quelleninformation des wenigstens einen Dienstes nicht zusammenpassen.

9. Verfahren nach Anspruch 1, das ferner das teilweise Einstellen der Zustandsvariablen des wenigstens einen Dienstes auf entsprechende im Eingabeargument enthaltene Zustandsinformationswerte umfasst, wenn die Quelleninformation der Zustandsinformation und die Quelleninformation des wenigstens einen Dienstes nicht zusammenpassen.

10. Verfahren nach Anspruch 9, wobei der wenigstens eine Dienst ein audiovisueller Transportdienst ist.

11. Verfahren nach Anspruch 1, wobei die Zustandsinformation und die Quelleninformation in einem Lesezeichenobjekt enthaltene Informationen sind.

12. Verfahren nach Anspruch 1, wobei der Schritt des Empfangens einer Zustandsinformationseinstellaktion in Antwort auf das Empfangen eines Lesezeichenauswahlbefehls initiiert wird.

13. Netzwerkeinrichtung zum Einstellen von Zustandsinformation eines Dienstes, wobei die Netzwerkeinrichtung umfasst: einen Empfänger zum Empfangen einer Zustandsinformationseinstellaktion zum Einstellen von Zustandsvariablen wenigstens eines durch die Netzwerkeinrichtung bereitgestellten Dienstes; und einen Prozessor zum Extrahieren eines Eingabearguments aus der Zustandsinformationseinstellaktion, wobei das Eingabeargument Zustandsinformation zum Einstellen der Zustandsvariablen und Quelleninformation umfasst, zum Vergleichen der Quelleninformation des Eingabearguments mit Quelleninformation des wenigstens einen Dienstes, und zum Bestimmen, ob die Zustandsvariablen des wenigstens einen Dienstes in Abhängigkeit von dem Vergleich eingestellt werden sollen, wobei die Quelleninformation des Eingabearguments und die Quelleninformation des wenigstens einen Dienstes Einrichtungskennungsinformation, Dienstkennungsinformation und/oder Dienstartinformation (301) umfassen.

14. Netzwerkeinrichtung nach Anspruch 13, wobei der wenigstens eine Dienst ein Rendering-Steuerdienst und/oder ein audiovisueller Transportdienst ist.

15. Netzwerkeinrichtung nach Anspruch 13, wobei die Dienstartinformation eine Dienstkennung und/oder Versionsinformation umfassen.

16. Netzwerkeinrichtung nach Anspruch 13, wobei das Eingabeargument eine Instanzkennung zum Identifizieren einer Verbindung zum Abspielen eines Medieninhalts nach dem Einstellen der Zustandsvariablen des wenigstens einen Dienstes umfasst.

17. Netzwerkeinrichtung nach Anspruch 13, wobei der Prozessor die Zustandsvariablen des wenigstens einen Dienstes auf im Eingabeargument enthaltene Zustandsinformationswerte einstellt, wenn die Quelleninformation der Zustandsinformation und die Quelleninformation des wenigstens einen Dienstes zusammenpassen.

18. Netzwerkeinrichtung nach Anspruch 13, wobei der Prozessor im Eingabeargument enthaltene Zustandsinformationswerte ignoriert, wenn die Quelleninformation der Zustandsinformation und die Quelleninformation des wenigstens einen Dienstes nicht zusammenpassen.

19. Netzwerkeinrichtung nach Anspruch 18, wobei der wenigstens eine Dienst ein Rendering-Steuerdienst ist.

20. Netzwerkeinrichtung nach Anspruch 18, wobei der Prozessor die Zustandsvariablen des wenigstens einen Dienstes auf voreingestellte Werte einstellt, wenn die Quelleninformation der Zustandsinformation und die Quelleninformation des wenigstens einen Dienstes nicht zusammenpassen.

21. Netzwerkeinrichtung nach Anspruch 13, wobei der Prozessor die Zustandsvariablen des wenigstens einen Dienstes teilweise auf entsprechende im Eingabeargument enthaltene Zustandsinformationswerte einstellt, wenn die Quelleninformation der Zustandsinformation und die Quelleninformation des wenigstens einen Dienstes nicht zusammenpassen.

22. Netzwerkeinrichtung nach Anspruch 21, wobei der wenigstens eine Dienst ein audiovisueller Transportdienst ist.

23. Netzwerkeinrichtung nach Anspruch 13, wobei die Zustandsinformation und die Quelleninformation in einem Lesezeichenobjekt enthaltene Informationen sind.

## Revendications

1. Procédé de paramétrage d'une information d'état d'un service fourni par un dispositif réseau, opérationnellement connecté à un système de réseau ouvert UPnP, le procédé comprenant : la réception d'une action de paramétrage d'information d'état pour paramétrer des variables d'état d'au moins un service fourni par le dispositif réseau ; l'extraction d'un argument d'entrée de l'action de paramétrage d'information d'état, dans lequel l'argument d'entrée comprend une information d'état pour paramétrer les variables d'état et une information de source ; la comparaison de l'information de source de l'argument d'entrée avec une information de source de l'au moins un service ; et la détermination s'il convient de paramétrer les variables d'état de l'au moins un service en fonction de la comparaison, dans lequel l'information de source de l'argument d'entrée et l'information de source de l'au moins un service comprennent au moins une parmi une information d'identification de dispositif, une information d'identification de service et une information de type de service (301).

2. Procédé selon la revendication 1, dans lequel l'au moins un service est au moins un parmi un service de contrôle de rendu et un service de transport audio-visuel.

3. Procédé selon la revendication 1, dans lequel l'information de type de service comprend au moins un parmi un identifiant de service et une information de version.

4. Procédé selon la revendication 1, dans lequel l'argument d'entrée comprend un identifiant d'instance pour identifier une connexion pour lire un contenu média après paramétrage des variables d'état de l'au moins un service.

5. Procédé selon la revendication 1, comprenant en outre le paramétrage des variables d'état de l'au moins un service à des valeurs d'information d'état incluses dans l'argument d'entrée si l'information de source de l'information d'état correspond à l'information de source de l'au moins un service.

6. Procédé selon la revendication 1, comprenant en outre l'ignorance de valeurs d'information d'état incluses dans l'argument d'entrée si l'information de source de l'information d'état ne correspond pas à l'information de source de l'au moins un service.

7. Procédé selon la revendication 6, dans lequel l'au moins un service est un service de contrôle de rendu.

8. Procédé selon la revendication 6, comprenant en outre le paramétrage des variables d'état de l'au moins un service à des valeurs par défaut si l'information de source de l'information d'état ne correspond pas à l'information de source de l'au moins un service.

9. Procédé selon la revendication 1, comprenant en outre le paramétrage partiel des variables d'état de l'au moins un service à des valeurs d'information d'état correspondantes incluses dans l'argument d'entrée si l'information de source de l'information d'état ne correspond pas à l'information de source de l'au moins un service.

10. Procédé selon la revendication 9, dans lequel l'au moins un service est un service de transport audio-visuel.

11. Procédé selon la revendication 1, dans lequel l'information d'état et l'information de source sont des informations incluses dans un objet signet.

12. Procédé selon la revendication 1, dans lequel l'étape de réception d'une action de paramétrage d'information d'état est initiée en réponse à la réception d'une commande de sélection de signet.

13. Dispositif réseau pour paramétrer une information d'état d'un service, le dispositif réseau comprenant : un récepteur pour recevoir une action de paramétrage d'information d'état pour paramétrer des variables d'état d'au moins un service fourni par le dispositif réseau ; et un processeur pour extraire un argument d'entrée de l'action de paramétrage d'information d'état, dans lequel l'argument d'entrée comprend une information d'état pour paramétrer les variables d'état et une information de source, comparer l'information de source de l'argument d'entrée avec une information de source de l'au moins un service, et déterminer s'il convient de paramétrer les variables d'état de l'au moins un service en fonction de la comparaison, dans lequel l'information de source de l'argument d'entrée et l'information de source de l'au moins un service comprennent au moins une parmi une information d'identification de dispositif, une information d'identification de service et une information (301) de type de service.

14. Dispositif réseau selon la revendication 13, dans lequel l'au moins un service est au moins un parmi un service de contrôle de rendu et un service de transport audio-visuel.

15. Dispositif réseau selon la revendication 13, dans lequel l'information de type de service comprend au moins un parmi un identifiant de service et une information de version.

16. Dispositif réseau selon la revendication 13, dans lequel l'argument d'entrée comprend un identifiant d'instance pour identifier une connexion pour lire un contenu média après paramétrage des variables d'état de l'au moins un service.

17. Dispositif réseau selon la revendication 13, dans lequel le processeur paramètre les variables d'état de l'au moins un service à des valeurs d'information d'état incluses dans l'argument d'entrée si l'information de source de l'information d'état correspond à l'information de source de l'au moins un service.

18. Dispositif réseau selon la revendication 13, dans lequel le processeur ignore les valeurs d'information d'état incluses dans l'argument d'entrée si l'information de source de l'information d'état ne correspond pas à l'information de source de l'au moins un service.

19. Dispositif réseau selon la revendication 18, dans lequel l'au moins un service est un service de contrôle de rendu.

20. Dispositif réseau selon la revendication 18, dans lequel le processeur paramètre les variables d'état de l'au moins un service à des valeurs par défaut si l'information de source de l'information d'état ne correspond pas à l'information de source de l'au moins un service.

21. Dispositif réseau selon la revendication 13, dans lequel le processeur paramètre partiellement les variables d'état de l'au moins un service à des valeurs d'information d'état correspondantes incluses dans l'argument d'entrée si l'information de source de l'information d'état ne correspond pas à l'information de source de l'au moins un service.

22. Dispositif réseau selon la revendication 21, dans lequel l'au moins un service est un service de transport audio-visuel.

23. Dispositif réseau selon la revendication 13, dans lequel l'information d'état et l'information de source sont des informations incluses dans un objet signet.
